# EUROPÄISCHE PATENTSCHRIFT

(11) **EP 3 893 623 B1**
(45) Veröffentlichungstag und Bekanntmachung des Hinweises auf die Patenterteilung: **30.11.2022**
(21) Anmeldenummer: 19828965.4
(22) Anmeldetag: 05.12.2019
(51) Int. Cl.: A01C 7/20

(54) **SÄMASCHINE MIT INDIVIDUELLER SCHARDRUCKREGELUNG**
SEEDING MACHINE WITH INDIVIDUAL PRESS FORCE REGULATION
SEMOIR AVEC CONTRÔLE INDIVIDUEL DE LA PRESSION DES SOCS

(30) Priorität: 14.12.2018 DE 102018132226
(43) Veröffentlichungstag der Anmeldung: 20.10.2021
(73) Patentinhaber: Amazonen-Werke H. Dreyer GmbH & Co. KG, 49205 Hasbergen-Gaste (DE)
(72) Erfinder: MERTENS, Daniel, 26121 Oldenburg (DE); WARNS, Felix, 27804 Berne (DE); HOFFMANN, Karl-Peter, 27798 Hude (DE); OLDENBURGER, Marcus, 27777 Ganderkesee (DE)
(86) Internationale Anmeldenummer: PCT/EP2019/083793
(87) Internationale Veröffentlichungsnummer: WO 2020/120276

(56) Entgegenhaltungen:
- EP-A1- 2 554 036
- US-A1- 2012 186 503
- US-A1- 2015 230 391
- US-A1- 2016 165 789
- US-A1- 2017 000 005
- US-A1- 2018 208 058
- US-B1- 8 380 356

## Beschreibung

Die Erfindung betrifft eine Sämaschine gemäß dem Oberbegriff des Patentanspruches 1. Ferner betrifft die Erfindung ein Verfahren zur individuellen Schardruckregelung gemäß dem Patentanspruch 8 sowie eine Steuerungs- und/oder Regeleinheit gemäß dem Patentanspruch 12.

Eine derartige Sämaschine mit einer automatischen Schardruckregelung ist in US 8 763 713 B2 beschrieben. Diese Sämaschine weist eine Mehrzahl von Reiheneinheiten auf, die an einem sich quer zur Fahrtrichtung erstreckenden Rahmen angeordnet sind. Solche Reiheneinheiten können mit verschiedenen Bodenbearbeitungswerkzeugen, wie Räumscheiben, Furchenformern, Tragrollen und/oder Furchenbedeckern, bestückt sein. Um beispielsweise eine ideale Ablagetiefe für das von der Sämaschine ausgebrachte Saatgut zu erreichen, werden zumindest einige der Bodenbearbeitungswerkzeuge mittels einem Hydraulikzylinder mit einem Schardruck beaufschlagt. Die Hydraulikzylinder der einzelnen Reiheneinheiten sind hierzu an das Hydrauliksystem eines die Sämaschine verbringenden Ackerschleppers angeschlossen und zwischen dem Rahmen und den Bodenbearbeitungswerkzeugen derart angeordnet, dass der Schardruck in Richtung des Bodens auf die Bearbeitungswerkzeuge wirkt. Um den Schardruck pro Reiheneinheit einstellen zu können, ist jedem Hydraulikzylinder ein separates Druckventil vorgeschaltet.

Ferner umfasst diese Sämaschine eine Sensoranordnung, welche hier aus jeweils einem Sensor pro Reiheneinheit gebildet ist. Die Sensoren sind jeweils derart angeordnet, dass sie dazu eingerichtet sind, ein elektrisches Signal korrespondierend zu einem auf das jeweilige Bodenbearbeitungswerkzeug wirkenden Gesamtdruck zu produzieren. Der wirkende Gesamtdruck kann als Maß für die Ablagetiefe gesehen werden und ergibt sich aus der Differenz zwischen dem eingestellten Schardruck einerseits und dem Bodengegendruck, den das jeweilige Bodenbearbeitungswerkzeug von unten aus Richtung des Bodens den es bearbeitet erfährt, andererseits. Der Bodengegendruck ist eine sich bei der Überfahrt eines Feldes ständig ändernde Größe des bearbeiteten Bodens.

Außerdem weist diese Sämaschine eine Steuerungs- und/oder Regeleinrichtung auf, welche signalleitend mit den Druckventilen und den Sensoren der Sensoranordnung verbunden ist. Die Steuerungs- und/oder Regeleinrichtung ist so dazu eingerichtet, den Schardruck jeder Reiheneinheit individuell einzustellen, indem ein Steuersignal an das dem Hydraulikzylinder vorgeschaltete Druckventil der jeweiligen Reiheneinheit ausgegeben wird. Sie ist ferner dazu eingerichtet, anhand der elektrischen Signale der Sensoranordnung den eingestellten Schardruck jeder Reiheneinheit anzupassen. Zur Anpassung des Schardrucks werden die von den Sensoren empfangenen Signale in ein angepasstes Steuersignal umgewandelt.

Nachteilig bei dieser Sämaschine ist, dass für diese Art der individuellen Regelung an jeder Reiheneinheit zumindest ein Sensor vorzusehen ist, welcher die für die Erzeugung eines angepassten Steuersignals notwendige Messung durchführt, bzw. das Eingangssignal für die Umwandlung erzeugt. Die Anzahl der Sensoren wird insofern durch die Anzahl der Reiheneinheiten bestimmt. Da gattungsgemäße Sämaschinen eine Mehrzahl von Reiheneinheiten aufweisen und die Sensoren kostenintensiv in der Beschaffung sind führt dies letztendlich zu erhöhten Herstellungskosten des Gesamtsystems.

Ferner sind Sämaschinen bekannt, die eine grundsätzlich andere Art der Regelung, nämlich das sektionsweise Regeln des Schardrucks, umsetzen. Für die sektionsweise Regelung des Schardruckes wird die Gesamtheit der Reiheneinheiten in Sektionen zu mehreren Reiheneinheiten unterteilt, wobei jede Sektion einen Sensor zu Erfassung des wirkenden Gesamtdrucks aufweist. Das Signal des Sensors kann ebenso in ein angepasstes Steuersignal umgewandelt werden, was dann allerdings stellvertretend für alle Reiheneinheiten der Sektion angewandt wird. Folglich kann hierbei nicht von einer individuellen Schardruckregelung jeder Reiheneinheit gesprochen werden, was eine sinkende Regelungsgüte und somit verringerte Arbeitsqualität nach sich zieht. US 2012/186503 beschreibt eine weitere Sämaschine mit automatischen Schardruckregelung.

Die der Erfindung zugrundeliegende Aufgabe besteht somit darin, eine Sämaschine mit individueller Schardruckregelung zu schaffen, die zugleich kostengünstig herzustellen ist.

Diese Aufgabe wird erfindungsgemäß dadurch gelöst, dass die Anzahl der Reiheneinheiten die Anzahl der Sensoren, vorzugsweise zumindest um das doppelte, besonders vorzugsweise zumindest um das sechsfache, übersteigt, wobei in einem Speicher der Steuerungs- und/oder Regeleinrichtung ein funktionaler Zusammenhang zwischen der Positionierung der einzelnen Reiheneinheiten am Rahmen einerseits und der Zuordnung der Sensoren zu den Reiheneinheiten und deren produzierten elektrischen Signalen andererseits hinterlegt ist und die Steuerungs- und/oder Regeleinrichtung mittels des funktionalen Zusammenhangs dazu eingerichtet ist, den Schardruck jeder Reiheinheit derart individuell zu regeln, dass der Gesamtdruck jeder Reiheneinheit zumindest näherungsweise einen vorbestimmten Wert erreicht.

Die Erfindung macht sich die Erkenntnis zunutze, dass sich das Verhalten landwirtschaftlicher Böden zumindest über die Breite der Sämaschine durch den funktionalen Zusammenhang nachbilden lässt. Anhand der Informationen wie viele Reiheneinheit am Rahmen befestigt sind und unter welchem Abstand zueinander diese sich befinden einerseits und an welcher dieser Reiheneinheiten der Gesamtdruck gemessen wird, sprich wo gemessen wird, und wie hoch der jeweils gemessene Gesamtdruck ist andererseits kann der funktionale Zusammenhang angewandt werden. Insbesondere wird berücksichtigt an wie vielen Reiheneinheiten kein Messwert unmittelbar aufgenommen wird und in welchem Abstand die Reiheneinheiten ohne zugeordneten Sensor zu zumindest einer Reiheneinheit mit Sensor am Rahmen angeordnet sind. Vorzugsweise sind die Sensoren als Kraftsensoren zur Erfassung der Aufstandskraft ausgeführt, wobei die von den Sensoren jeweils erfasste Größe, nämlich eine Kraft, über bekannte allgemeingültige Zusammenhänge in andere Größen, wie einen Druck umrechenbar ist. Hierzu wäre die Kraft durch die Fläche auf die die Kraft wirkt zu teilen.

Der funktionale Zusammenhang nutzt hierbei die von den Sensoren produzierten elektrischen Signale als Stützstellen und interpoliert diese in auf dem Speicher hinterlegter Weise für die Reiheneinheiten ohne zugeordneten Sensor. Insofern ist es anhand des erfindungsgemäßen funktionalen Zusammenhangs möglich die notwendige Anzahl der Sensoren für eine individuelle Schardruckregelung jeder Reiheneinheit zu reduzieren und so eine kostengünstige Herstellung des Gesamtsystems zu realisieren.

Die Steuerungs- und/oder Regeleinrichtung kann also anhand des funktionalen Zusammenhangs den Schardruck für jede Reiheneinheit individuell regeln, das heißt bestimmen und einstellen, indem sie die verringerte Anzahl realer Messwerte und die mittels des funktionalen Zusammenhangs interpolierten Werte zur Regelung nutzt. Hierbei macht sich die Erfindung ferner die Erkenntnis zunutze, dass der gemessene bzw. prognostizierte Gesamtdruck bei Kenntnis der Einstellung des Druckventils jeder Reiheneinheit, also des auf jede Reiheneinheit jeweils wirkenden Schardrucks, ebenso ein Maß für den auftretenden Bodengegendruck ist. Die drei Werte Gesamtdruck, Schardruck und Bodengegendruck stehen über den Zusammenhang, dass der Gesamtdruck aus der Differenz zwischen Schardruck und Bodengegendruck berechnet werden kann, in Relation zueinander.

Weiter vorteilhaft ist hierbei, dass durch die Regelung zumindest näherungsweise ein vorbestimmter Gesamtdruck an jeder Reiheneinheit erreicht wird und die Reiheneinheiten somit alle annährend im vorbestimmten Bereich arbeiten. Der vorbestimmte Wert des Gesamtdrucks kann vom Benutzer einstellbar sein, so dass dieser bspw. annährend bestimmen kann auf welcher Tiefe von der Sämaschine ausgebrachtes Saatgut abgelegt wird.

In einer vorteilhaften Ausführungsform der Erfindung ist vorgesehen, dass der funktionale Zusammenhang eine mathematische Ausgleichsrechnung umfasst. Mit Hilfe der Ausgleichsrechnung lassen sich in zweckmäßiger Weise anhand der vorhandenen Informationen die zu interpolierenden Gesamtdrücke der Reiheneinheiten ohne zugeordneten Sensor approximativ bestimmen. Die Ausgleichsrechnung kann sich hierbei die Methode der kleinsten Quadrate zur Fehlerminimierung zunutze machen. Der Ausgleichsrechnung kann ebenso eine grafische Methode zugrunde liegen, wobei den ermittelten Gesamtdrücken ein stetig gekrümmter vermittelnder Graph angenähert wird. Dieser Graph kann den Zusammenhang zwischen den am Rahmen angeordneten Reiheneinheiten zum gemessenen und/oder bestimmten Gesamtdruck abbilden. Vorteilhaft ist hierbei, dass diese Art von funktionalem Zusammenhang eine flexible Regelung für insbesondere heterogene Bodenverhältnisse erlaubt, da besonders schnelle und präzise Anpassungen abbildbar sind.

In einer besonders vorteilhaften Ausführungsform der Erfindung ist vorgesehen, dass der funktionale Zusammenhang eine lineare Ausgleichsrechnung umfasst. In besonders einfacher Weise sind so die zur individuellen Regelung des Schardrucks notwendigen Eingangsgrößen geschaffen. Besonders vorteilhaft ist hierbei, dass hierzu ein äußerst geringer Rechenaufwand benötigt ist. Diese Art von funktionalem Zusammenhang eignet sich für vorzugsweise homogene Böden, die also insbesondere keine oder kaum plötzliche Wechsel zwischen unterschiedlichen, zum Beispiel harten und weichen, Bodenbereichen aufweisen.

In einer weiteren vorteilhaften Ausführungsform der Erfindung ist vorgesehen, dass der funktionale Zusammenhang gleitende Mittelwerte umfasst. Die zur Verfügung stehenden Informationen werden also überlappend zu Mittelwerten verrechnet, wobei sich der betrachtete Abschnitt stetig verschiebt. Diese Ausführungsform zeichnet sich durch eine Glättung der von den Sensoren produzierten Messwerte aus. Dies hat den Vorteil, dass besonders große Amplitudenunterschiede zwischen den ermittelten Messwerten gedämpft werden, was weniger große Anpassungen der eingestellten Schardrücke bedingt. Die Regelung mit dieser Art von funktionalem Zusammenhang erfordert also eine geringere hydraulische Leistung zur Anpassung der individuellen Schardrücke, so dass Betriebskosten eingespart werden. Sie kann für homogene bis schwach heterogene Böden vorteilhaft genutzt werden.

Die erfindungsgemäße Sämaschine ist ferner vorteilhaft dadurch weitergebildet, dass der funktionale Zusammenhang eine Spline-Interpolation umfasst. Die Spline-Interpolation hat den Vorteil, dass die von den Sensoren gemessenen Gesamtdrücke nahezu unverändert in die Regelung einfließen. Die Spline-Interpolation kann durch lineare Zwischenfunktionen, also als sogenannter Streckenzug, gebildet sein, wobei die Werte zwischen zumindest zwei Messwerten durch lineare Teilstücke angenähert werden. Die Spline-Interpolation kann durch Zwischenfunktionen höheren Grades, beispielsweise kubische Funktionen, gebildet sein. Hierbei werden die Werte zwischen zumindest zwei Messwerten durch einfach oder mehrfach stetig differenzierbare Teilstücke angenähert. Diese Weiterbildung hat zum Vorteil, dass sich insbesondere heterogene Bodenverhältnisse akkurat nachbilden lassen.

In einer weiteren vorteilhaften Weiterbildung der Erfindung ist vorgesehen, dass in dem Speicher der Steuerungs- und/oder Regeleinrichtung eine Mehrzahl verschiedenartiger funktionaler Zusammenhänge zwischen der Positionierung der einzelnen Reiheneinheiten am Rahmen einerseits und der Zuordnung der Sensoren zu den Reiheneinheiten und deren produzierten elektrischen Signalen andererseits hinterlegt ist, wobei die Art des zur Regelung der individuellen Schardrücke jeder Reiheneinheit genutzten funktionalen Zusammenhangs wählbar ist. Die Art des funktionalen Zusammenhangs kann automatisch von der Steuerungs- und/oder Regeleinrichtung wählbar sein. Alternativ oder zusätzlich kann die Steuerungs- und/oder Regeleinrichtung Teil einer zumindest eine Terminaleinheit aufweisenden Maschinensteuerung sein. Vorzugsweise ist die Terminaleinheit als Anzeige- und/oder Bedienvorrichtung ausgebildet, wobei die Art des funktionalen Zusammenhangs für den Benutzer insbesondere durch Interaktion mit der Terminaleinheit wählbar ist. Infolge dieser Maßnahme ist für eine Mehrzahl denkbarer Einsatzfälle der Sämaschine eine an den Bodentyp des zu bearbeitenden Feldes angepasste Art des funktionalen Zusammenhangs wählbar. Folglich sind die Steuerungs- und/oder Regeleinrichtung, also die Regelung, und/oder der Benutzer mittels dieser Weiterbildung dazu eingerichtet, flexibel auf unterschiedliche Bodenverhältnisse zu reagieren, um verbesserte Arbeitsergebnisse zu erreichen.

Die erfindungsgemäße Sämaschine ist außerdem vorteilhaft dadurch weitergebildet, dass in dem Speicher der Steuerungs- und/oder Regeleinrichtung ein Filter hinterlegt ist, wobei der Filter dazu eingerichtet ist, das elektrische Signal zumindest eines Sensors, welches einen ersten Schwellenwert unterschreitet und/oder einen zweiten Schwellenwert überschreitet, zu kompensieren. Das betreffende Signal kann in an sich bekannter Weise auf verschiedene Arten kompensiert werden. Um ein Beispiel zu nennen: Das Signal kann gelöscht, also nicht weiter berücksichtigt, werden und/oder auf einen zu einem anderen Zeitpunkt detektierten Wert gesetzt werden. Bei Auftreffen eines Bodenbearbeitungswerkzeuges auf ein im Erdreich befindliches Hindernis, wie einen Stein, oder Verbringen eines Bodenbearbeitungswerkzeuges durch eine Wasserlache registriert der Sensor einen unverhältnismäßig hohen bzw. niedrigen Gesamtdruck für die Reiheneinheit der dieses Bodenbearbeitungswerkzeug zugeordnet ist. Durch geeignete Bestimmung des ersten und zweiten Schwellenwertes können solche lokal auftretenden Anomalien erkannt werden. Vorteilhaft ist hierbei, dass solche sogenannten Ausreißer in geeigneter Weise verarbeitet werden, so dass die Regelung der übrigen Reiheneinheiten durch Ausreißer nahezu unbeeinflusst ist.

Die der Erfindung zugrunde liegende Aufgabe wird ferner durch ein Verfahren zur individuellen Regelung einer Mehrzahl von Schardrücken gelöst. Jeder Schardruck wirkt jeweils auf Bodenbearbeitungswerkzeuge einer Reiheneinheit einer Sämaschine ein. Der Schardruck wird an jeder Reiheneinheit von einem Hydraulikzylinder erzeugt und wird mittels eines dem Hydraulikzylinder vorgeschalteten Druckventils eingestellt. Ferner werden auf zumindest zwei Reiheneinheiten wirkende Gesamtdrücke jeweils mittels einer Sensoranordnung erfasst. Die Sensoranordnung umfasst also zumindest zwei Sensoren jeweils zur Erfassung des auf die Bodenbearbeitungswerkzeuge einer Reiheneinheit wirkenden Gesamtdrucks. Außerdem ist die Anzahl und Positionierung der einzelnen Reiheneinheiten und an welchen dieser Reiheneinheiten Gesamtdrücke erfasst werden bekannt und eine Steuerungs- und/oder Regeleinheit ist signalleitend zumindest mit den Druckventilen und der Sensoranordnung verbunden. Das erfindungsgemäße Verfahren umfasst das Auswerten der erfassten Gesamtdrücke, das Interpolieren mittels eines funktionalen Zusammenhangs zwischen der Positionierung der einzelnen Reiheneinheiten einerseits und den erfassten und ausgewerteten Gesamtdrücken andererseits, das Bestimmen individueller Schardrücke für alle Reiheneinheiten anhand des angewandten funktionalen Zusammenhangs, sowie das Einstellen der individuellen Schardrücke. Das erfindungsgemäße Verfahren wird stetig und kontinuierlich in zeitlichem Abstand wiederholt und mit dem Ziel, dass jede Reiheneinheit näherungsweise einen vorbestimmten Gesamtdruck erfährt, durchgeführt.

Beim Auswerten der Gesamtdrücke werden ihre Beträge festgestellt und als Werte in der Regelung verarbeitet. Ferner wird insbesondere überprüft ob die erfassten Gesamtdrücke zumindest annährend den zuletzt erfassten Gesamtdrücken entsprechen. Dadurch, dass die Abstände sämtlicher Reiheneinheiten am Rahmen zueinander, sowie wo die Gesamtdrücke aufgenommen wurden, bekannt sind kann der funktionale Zusammenhang mit den aktuellen Werten des Gesamtdrucks angewandt werden. Der funktionale Zusammenhang bildet das Verhalten des Bodens nach und wird so zur Interpolation der Werte des Gesamtdrucks der Reiheneinheiten mit zugeordnetem Sensor auf die Reiheneinheiten ohne zugeordneten Sensor genutzt. Die Interpolation erzeugt also nach Art und Weise des funktionalen Zusammenhangs approximierte Werte des Gesamtdrucks für die Reiheneinheiten mit und ohne zugeordneten Sensor. Anschließend werden anhand dieser Interpolation individuelle Schardrücke für alle Reiheneinheiten bestimmt und eingestellt, so dass eine eventuelle Differenz zwischen erfassten bzw. angenäherten Gesamtdrücken und einem vorbestimmten Gesamtdruck möglichst ausgeglichen werden. Vorzugsweise werden die vorstehenden Schritte unter Verwendung der Steuerungs- und/oder Regeleinrichtung und/oder von der Steuerungs- und/oder Regeleinrichtung selbst durchgeführt.

In einer Weiterbildung des erfindungsgemäßen Verfahrens ist vorgesehen, dass die erfassten und ausgewerteten Gesamtdrücke als Stützstellen bei der Anwendung des funktionalen Zusammenhangs dienen und zwischen und/oder neben den Stützstellen mittels des funktionalen Zusammenhangs interpoliert wird. Die erfassten und ausgewerteten Gesamtdrücke eignen sich in besonders vorteilhafter Weise als Stützstellen für die Approximation der erwarteten Werte der Reiheneinheiten ohne separaten zugeordneten Sensor, da diese besonders zuverlässige Auskunft über die realen Bodenbedingungen geben können. Ferner können mittels der Stützstellen Tendenzen abgeleitet werden, um das Verhalten des Bodens möglichst zutreffend anzunähern. Außerdem kann bei der Interpolation der Abstand zwischen einer Reiheneinheit für die der Gesamtdruck erfasst und ausgewertet wurde, die also eine Stützstelle bildet, und zumindest einer Reiheneinheit für die der Gesamtdruck prognostiziert wird beachtet werden. Folglich dienen die Stützstellen sowohl für sich genommen als auch gemeinsam betrachtet dazu das zu erwartende Verhalten des Bodens möglichst zweckmäßig nachzubilden.

In einer weiteren Ausführungsform des erfindungsgemäßen Verfahrens wird eine Art von funktionalem Zusammenhang aus einer Mehrzahl verschiedenartiger funktionaler Zusammenhänge automatisch oder manuell ausgewählt. Die automatische Auswahl kann durch die Steuerungs- und/oder Regeleinheit erfolgen. Außerdem kann die Steuerungs- und/oder Regeleinrichtung als Terminaleinheit innerhalb einer Maschinensteuerung ausgebildet sein. Vorzugsweise ist die Steuerungs- und/oder Regeleinrichtung dann mit einer Anzeige- und/oder Bedienvorrichtung geschaffen, wobei die Art des funktionalen Zusammenhangs durch den Benutzer anhand der Anzeige- und/oder Bedienvorrichtung ausgewählt wird. Da sich die Arten der funktionalen Zusammenhänge hinsichtlich ihrer Eignung das Verhalten unterschiedlicher Bodentypen nachzubilden unterscheiden können, kann durch diese Ausführungsform flexibel im konkreten Anwendungsfall reagiert werden. Der Benutzer kennt seine zu bewirtschaftenden Flächen und kann aus der Anzahl zur Verfügung stehender Arten funktionaler Zusammenhänge den geeigneten auswählen. Ebenso denkbar ist, dass die Steuerungs- und/oder Regeleinrichtung beispielsweise anhand der detektierten Gesamtdrücke und insbesondere deren zeitlichen Verläufe die geeignete Art von funktionalem Zusammenhang auswählt. Häufige und/oder große Unterschiede der gemessenen Gesamtdrücke können hierbei ein Anhaltspunkt für heterogene Bodenbedingungen sein.

In einer weiteren vorteilhaften Weiterbildung des Verfahrens wird geprüft ob zumindest einer der erfassten Gesamtdrücke einen ersten Schwellenwert unterschreitet und/oder einen zweiten Schwellenwert überschreitet. Um Ausreißer zu erkennen und zweckmäßig zu verarbeiten ist es vorteilhaft, dass der erste Schwellenwert eine Untergrenze des Gesamtdrucks darstellt und der zweite Schwellenwert eine Obergrenze des Gesamtdrucks abbildet. Sollte der erfasste Gesamtdruck jenseits dieser Grenzen liegen, also außerhalb des von dem ersten und zweiten Schwellenwert eingeschlossenen Bereichs des ordnungsgemäßen Betriebs, ist vorgesehen, dass dieser Gesamtdruck gesondert verarbeitet wird. Der den ersten Schwellenwert unterschreitenden oder den zweiten Schwellenwert überschreitende Gesamtdruck wird kompensiert bevor der funktionale Zusammenhang angewandt wird. Auf diese Weise wird der Ausreißer auf einen Wert zurückgeführt, der innerhalb des Bereichs des ordnungsgemäßen Betriebs liegt oder gelöscht, so dass der negative Einfluss von Ausreißern reduziert wird.

Die der Erfindung zugrunde liegende Aufgabe wird ferner durch eine Steuerungs- und/oder Regeleinheit für eine Sämaschine gelöst. Die Sämaschine weist eine Mehrzahl von Reiheneinheiten, wobei die Reiheneinheiten an einem sich quer zur Fahrtrichtung erstreckenden Rahmen angeordnet sind und jeweils Bodenbearbeitungswerkzeuge und einen auf die Bodenbearbeitungswerkzeuge einen Schardruck ausübenden Hydraulikzylinder aufweisen, wobei mittels eines jedem Hydraulikzylinder vorgeschalteten Druckventils der auf die Bodenbearbeitungswerkzeuge wirkende Schardruck einstellbar ist, und eine Sensoranordnung die zumindest zwei, vorzugsweise zumindest drei oder mehr, Sensoren umfasst, welche jeweils dazu eingerichtet sind, ein elektrisches Signal im Zusammenhang mit einem auf die Bodenbearbeitungswerkzeuge einer Reiheneinheit wirkenden Gesamtdruck, insbesondere aus der Differenz zwischen dem Schardruck und einem Bodengegendruck, zu produzieren, auf. Die Steuerungs- und/oder Regeleinheit ist mit den Druckventilen und der Sensoranordnung verbunden und dazu eingerichtet das Verfahren zur individuellen Regelung einer Mehrzahl von Schardrücken nach einer der vorstehenden Ausführungsformen auszuführen.

Hinsichtlich der Vorteile und Modifikationen der erfindungsgemäßen Steuerungs- und/oder Regeleinheit wird auf die Vorteile und Modifikationen des erfindungsgemäßen Verfahrens verwiesen.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene Sämaschine in perspektivischer Ansicht,
- Fig.2: eine von der Sämaschine gelöste Reiheneinheit in Seitenansicht,
- Fig.3: ein Funktionsschaltbild der Sämaschine,
- Fig.4: ein Diagramm mit verschiedenartigen funktionalen Zusammenhängen, und
- Fig.5: ein Ausführungsbeispiel des erfindungsgemäßen Verfahren in schematischer Darstellung.

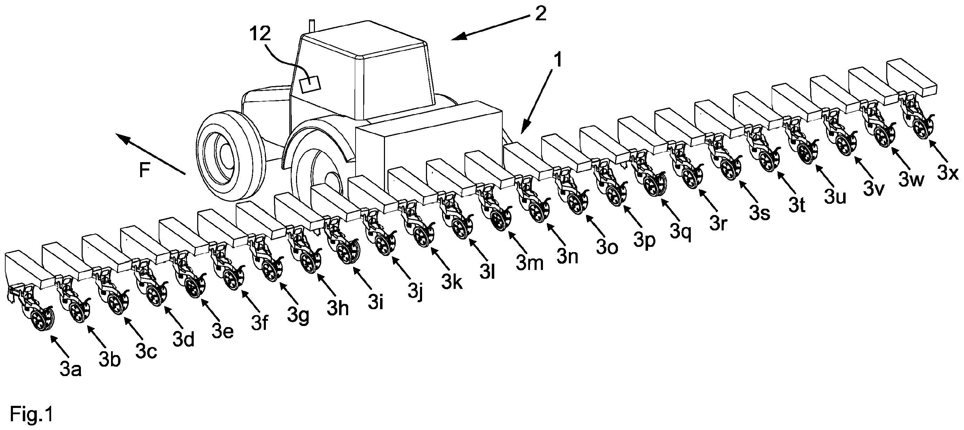

Eine als Einzelkornsämaschine ausgeführte Sämaschine 1, welche hinter einem Ackerschlepper 2 angehangen ist und sich so mit dem Ackerschlepper 2 in Fahrtrichtung F fortbewegen kann, ist in Fig.1 zu sehen. Die Sämaschine 1 weist eine Mehrzahl von quer zur Fahrtrichtung F an einem Rahmen angeordneten Reiheneinheiten 3a-3x auf. Die Reiheneinheiten 3a-3x sind hier in ihrer nebeneinander angeordneten Arbeitsposition gezeigt. Der Rahmen kann faltbar bzw. klappbar und/oder teleskopierbar ausgestaltet sein, so dass die Reiheneinheiten 3a-3x in eine Transportposition reduzierter Breite verbringbar sind.

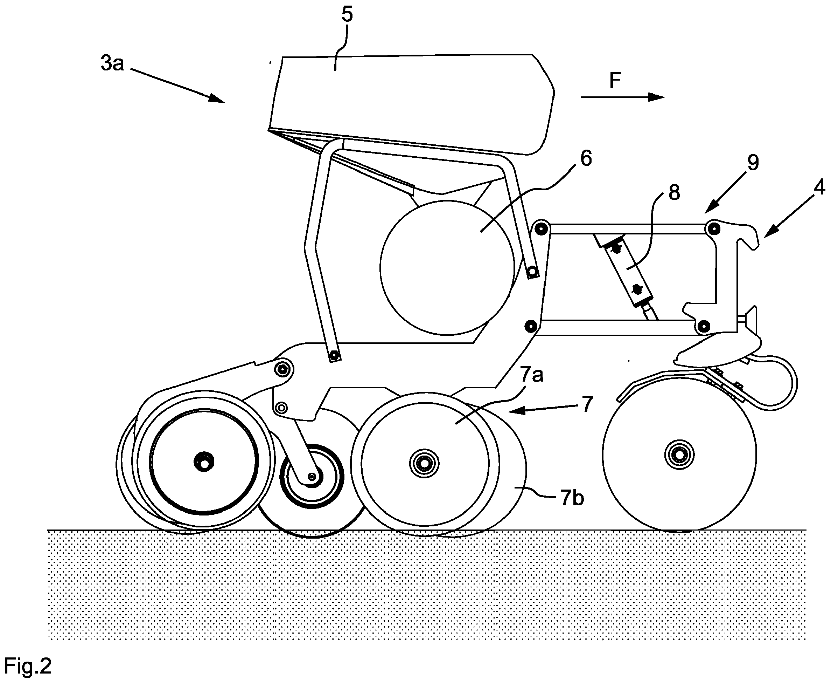

Eine der Reiheneinheiten 3a-3x ist stellvertretend in Fig.2 in einer vom Rahmen gelösten Position gezeigt. Diese Reiheneinheit 3a weist an ihrem in Fahrtrichtung F vorderen Ende einen Anbauflansch 4 auf, über den sie an dem hier nicht dargestellten Rahmen angeordnet ist. An dem oberen Ende der Reiheneinheit 3a ist ein Vorratsbehälter 5 für Saatgut vorgesehen. Von dem Vorratsbehälter 5 wird das Saatgut an eine Vereinzelungseinrichtung 6 abgegeben, die wiederum in an sich bekannter Weise das Saatgut vereinzelt und über verdeckte Ausbringleitungen an Bodenbearbeitungswerkzeuge 7 der Reiheneinheit 3a abgibt. Die Bodenbearbeitungswerkzeuge 7 sind hier als Tragrollen 7a, sowie von den beiden beidseitig angeordneten Tragrollen 7a umgebene und deshalb zumindest teilweise verdeckte Schneidscheiben 7b und wiederum zwischen den Schneidscheiben in verdeckter Weise angeordneter Furchenformer ausgeführt. Die vereinzelten Saatgutkörner werden an den Bodenbearbeitungswerkzeugen 7 in den Boden eingearbeitet, so dass deren Eindringtiefe in den Boden Einfluss auf die Ablagetiefe des Saatgutes und somit deren Aufgang und das Arbeitsergebnis hat. Es wird daher angestrebt die Eindringtiefe in einstellbarer Weise möglichst konstant zu halten. Da allerdings zuweilen sehr unterschiedliche Bodengegendrücke von landwirtschaftlichen Böden auf die Bodenbearbeitungswerkzeuge 7 wirken, ist ein Hydraulikzylinder 8 vorgesehen, um dem Bodengegendruck entgegenzuwirken. Der Hydraulikzylinder 8 ist über hier nicht dargestellte Schläuche mit einer Druckquelle fluidleitend verbunden.

Der Hydraulikzylinder 8 übt über einen sich an den Anbauflansch 4 anschließenden Parallelogrammmechanismus 9 einen sogenannten Schardruck auf die Bodenbearbeitungswerkzeuge 7 aus. Der Hydraulikzylinder 8 ist also dazu eingerichtet, mittels des Parallelogrammmechanismus 9 eine Verschiebung der Reiheneinheit 3a-3x relativ zum Rahmen zu bewirken, so dass die Bodenbearbeitungswerkzeuge 7 mit erhöhtem Druck, bei Verschiebung in Richtung des Bodens, bzw. verringertem Druck, bei Verschiebung vom Boden weg, beaufschlagt werden.

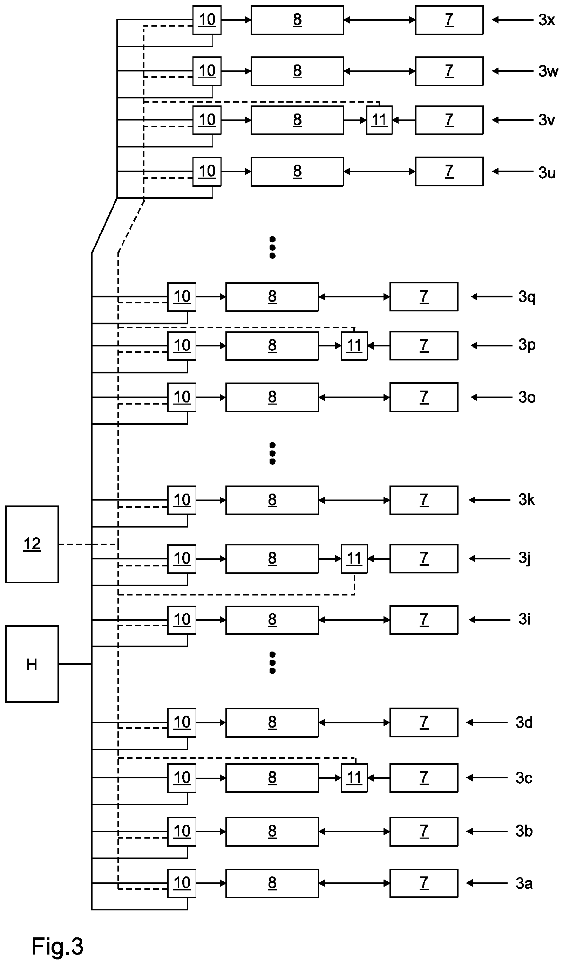

Der von dem Hydraulikzylinder 8 erzeugte, also auf die Bodenbearbeitungswerkzeuge 7 wirkende, Schardruck ist über ein dem Hydraulikzylinder 8 vorgeschaltetes Druckventil 10 an jeder Reiheneinheit 3a-3x einstellbar, wie auch Fig.3 zeigt. Ferner ist in Fig.3 eine Sensoranordnung, bestehend aus insgesamt vier Sensoren 11, der Sämaschine 1 gezeigt. Bei den Sensoren 11 kann es sich um an sich gebräuchliche Kraftsensoren handeln, deren erfasste Größe sich über bekannte Zusammenhänge beispielsweise in einen Druck umrechnen lässt. Hierzu kann die Kraft durch die bekannte Fläche auf die sie wirkt geteilt werden. Die Sensoren 11 sind jeweils dazu eingerichtet den auf die Bodenbearbeitungswerkzeuge 7 der Reiheneinheit 3a-3x der sie zugeordnet sind, hier der Reiheneinheiten 3c, 3j, 3p, 3v, wirkenden Gesamtdruck, insbesondere aus der Differenz zwischen Schardruck und Bodengegendruck, zu detektieren. Die Sensoren 11 erzeugen ein elektrisches Signal korrespondierend zu dem detektierenden Gesamtdruck und stehen signalleitend in Verbindung mit einer als Terminaleinheit 12 ausgeführten Steuerungs- und/oder Regeleinrichtung. Die Terminaleinheit 12 steht außerdem in Signalverbindung mit den Druckventilen 10 und ist so dazu eingerichtet, den Schardruck jeder Reiheneinheit 3a-3x individuell einzustellen und anhand der elektrischen Signale der Sensoranordnung anzupassen. Die Terminaleinheit 12 dient ferner als Anzeige- und/oder Bedienvorrichtung und ist im Führerhaus des Ackerschleppers 2 angeordnet, wie Fig.1 zeigt. Die Hydraulikzylinder 8 stehen über die Druckventile 10 in Fluidverbindung mit einem Hydrauliksystem H, welches die Druckquelle aufweist. Das Hydrauliksystem H kann von dem Ackerschlepper 2 zur Verfügung gestellt werden.

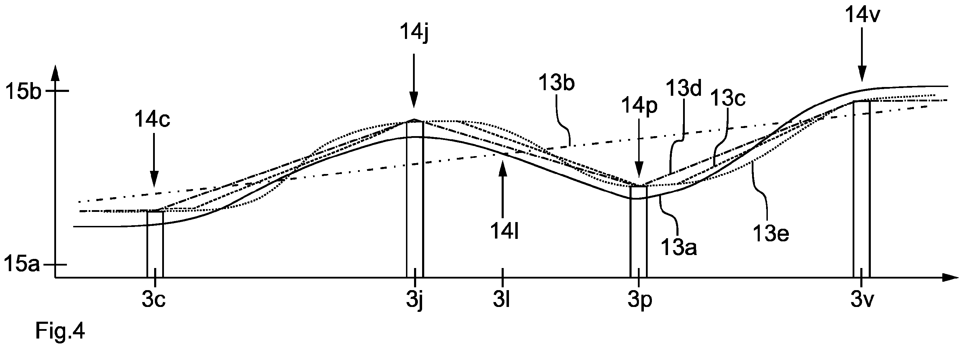

Um den Schardruck jeder Reiheneinheit 3a-3x mittels der Terminaleinheit 12 derart individuell zu regeln, dass der Gesamtdruck, und somit näherungsweise die Eindringtiefe, jeder Reiheneinheit 3a-3x zumindest annährend einen vorbestimmten Wert erreicht, obwohl an nur vier der Reiheneinheiten 3a-3x ein separater Sensor 11 zum Messen des realen Gesamtdrucks vorgesehen ist, ist in einem Speicher der Terminaleinheit 12 eine Mehrzahl verschiedenartiger funktionaler Zusammenhänge 13a-13e hinterlegt. Wie das Diagramm in Fig.4 verdeutlicht, bildet der funktionale Zusammenhang 13a-13e die Relation zwischen der Positionierung der einzelnen Reiheneinheiten 3a-3x am Rahmen, aufgetragen über die horizontale Achse, einerseits und der Zuordnung der Sensoren 11 zu den Reiheneinheiten 3a-3x, sowie deren produzierten elektrischen Signalen, also des gemessenen Gesamtdrucks, aufgetragen über die vertikale Achse, andererseits ab. Anhand des funktionalen Zusammenhangs 13a-13e sind sämtliche Werte 14a-14x des Gesamtdrucks bestimmbar, so dass die Terminaleinheit 12 den Schardruck anhand dessen regeln kann, um eine eventuelle Differenz zwischen dem voreingestellten, gewünschten Gesamtdruck und dem so bestimmten Gesamtdruck jeder Reiheneinheit 3a-3x auszugleichen.

Der funktionale Zusammenhang 13a-13e kann als mathematische Ausgleichsrechnung 13a, eine lineare Ausgleichsrechnung 13b, gleitende Mittelwerte 13c, lineare Spline-Interpolation 13d oder kubische Spline-Interpolation 13e ausgeführt sein. Die funktionalen Zusammenhänge 13a-13e unterscheiden sich also hinsichtlich ihrer Art und Weise, wie die Werte 14a-14x des Gesamtdrucks aus den vorhandenen Informationen bestimmt werden und sind in einem Speicher der Terminaleinheit 12 hinterlegt. Um auf unterschiedliche Bodenbedingungen und/oder Bodentypen zu reagieren, kann der Benutzer auf der Terminaleinheit 12 die Art des zur Annäherung eingesetzten funktionalen Zusammenhangs 13a-13e auswählen. Alternativ oder zusätzlich ist es denkbar, dass zumindest ein geeigneter funktionaler Zusammenhang 13a-13e von der Terminaleinheit vorgeschlagen oder automatisch ausgewählt wird. So ist beispielsweise für die Reiheneinheit 3l der mittels der mathematischen Ausgleichsrechnung 13a oder linearen Ausgleichsrechnung 13b bestimmte Wert 141 des Gesamtdrucks in dem Diagramm an dem Schnittpunkt der, an dieser Stelle unteren, beiden Graphen in Fig.4 ablesbar. Die andersartig bestimmten Werte 14l des Gesamtdrucks liegen vertikal darüber.

Da landwirtschaftliche Böden zuweilen lokal auftretende Anomalien aufweisen und aufgrund dessen für die Regelung unbrauchbare Gesamtdrücke, sogenannte Ausreißer, an den Bodenbearbeitungswerkzeugen 7 detektiert werden, ist es zweckmäßig, dass in dem Speicher der Terminaleinheit 12 ein Filter hinterlegt ist. Der Filter sorgt dafür, dass stellvertretend für den gemessenen Gesamtdruck produzierte elektrische Signale, welche einen ersten eine Untergrenze 15a bildenden Schwellenwert unterschreiten oder einen zweiten eine Obergrenze 15b bildenden Schwellenwert überschreiten, kompensiert werden. Kompensierte Signale gehen nicht in die Anwendung der funktionalen Zusammenhänge 13a-13e ein, so dass diese nicht nach oben bzw. unten verfälscht werden.

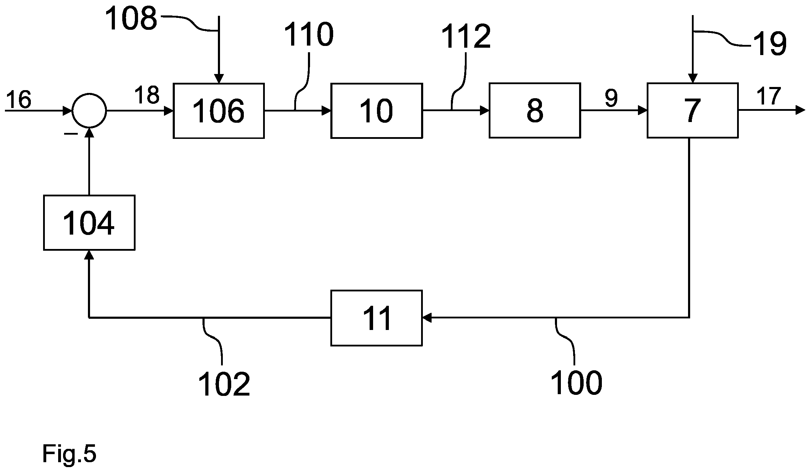

Die Fig.5 zeigt schematisch den Ablauf des Verfahrens zur individuellen Regelung der Mehrzahl von auf Bodenbearbeitungswerkzeuge 7 der Reiheneinheiten 3a-3x der Sämaschine 1 einwirkenden Schardrücken. Die Führungsgröße 16 des Regelkreises wird gebildet durch den vorbestimmten Gesamtdruck. Dieser kann für den Benutzer mittels der Terminaleinheit 12 einstellbar sein. Die Regelgröße 17 ist in diesem Fall die Eindringtiefe der Bodenbearbeitungswerkzeuge 7 jeder Reiheneinheit 3a-3x. Idealerweise ist diese zumindest annährend konstant für alle Reiheneinheiten 3a-3x. Hierzu wird in der Rückführung in dem Fall der vorstehend beschriebenen Sämaschine 1 in Schritt 100 mittels der Sensoren 11 der Gesamtdruck auf die Bodenbearbeitungswerkzeuge 7 der Reiheneinheiten 3c, 3j, 3p, 3v gemessen. Die erfassten Gesamtdrücke werden in Schritt 102 ausgewertet, so dass die Werte 14c, 14j, 14p, 14v des Gesamtdrucks resultieren. In Schritt 104 wird geprüft ob zumindest einer der erfassten und ausgewerteten Gesamtdrücke die Untergrenze 15a unterschreitet oder die Obergrenze 15b überschreitet. Gesamtdrücke für die dies zutrifft werden als Ausreißer bezeichnet und werden vorstehend beschriebener Weise in Schritt 104 kompensiert.

Aus dem Vergleich der so verarbeiteten Gesamtdrücke mit der Führungsgröße 16, dem vorbestimmten Gesamtdruck, resultiert die Regelabweichung 18. In Schritt 106 wird mittels eines der funktionalen Zusammenhänge 13a-13e, dessen Art in Schritt 108 automatisch von der Terminaleinheit 12 oder manuell durch den Benutzer ausgewählt wurde, interpoliert. Die erfassten und ausgewerteten Werte 14c, 14j, 14p, 14v des Gesamtdrucks dienen hierbei als Stützstellen für den funktionalen Zusammenhang 13a-13e und es wird über die Stützstellen approximiert. Das heißt, der ausgewählte funktionale Zusammenhang 13a-13e wird auf die vorhandenen Informationen angewandt, um die Gesamtdrücke jeder Reiheneinheit 3a-3x zu prognostizieren. Hierbei berücksichtigt der funktionale Zusammenhang 13a-13e in welchem Abstand die Reiheneinheiten 3a-3x am Rahmen zueinander angeordnet sind und wo die für die aktuelle Regelschleife verwendeten Gesamtdrücke aufgenommen wurden, sowie welche Werte 14c, 14j, 14p, 14v diese haben. Es ergibt sich die durch die Fig.4 veranschaulichte Situation: Jeder Reiheneinheit 3a-3x kann mittels eines oder mehreren der funktionalen Zusammenhänge 13a-13e ein Wert 14a-14x des Gesamtdrucks zugeordnet werden. Um eventuelle Differenzen zwischen dem voreinstellten Gesamtdruck und den so ermittelten Werten 14a-14x auszugleichen, werden in Schritt 110 individuelle Schardrücke für alle Reiheneinheiten 3a-3x bestimmt und von der Terminaleinheit 12 als Signal an die jeweiligen Druckventile 10 geleitet. Hierbei können selbstverständlich für zwei oder mehr Reiheneinheiten 3a-3x die gleichen Schardrücke bestimmt werden; es wird für jede Reiheneinheit 3a-3x ein individuelles Signal erzeugt.

Die in Schritt 110 bestimmten individuellen Schardrücke werden von den Druckventilen 10 in Schritt 112 an den Hydraulikzylindern 8 eingestellt, von wo aus diese über die Parallelogrammmechanismen 9 auf die Bodenbearbeitungswerkzeuge 7 ausgeübt werden. Auf die Bodenbearbeitungswerkzeuge 7 wirkt außerdem der als Störgröße 19 eingehende Bodengegendruck ein. Das vorstehende Verfahren wird bei dieser Sämaschine 1 von der als Terminaleinheit 12 ausgeführten Steuerungs- und/oder Regeleinheit stetig und wiederholt ausgeführt, so dass die Sämaschine 1 auf sämtlichen Bodentypen und unter wechselhaften Bodenbedingungen möglichst optimale Arbeitsergebnisse erzielt.

### Bezugszeichenliste

- 1: Sämaschine
- 2: Ackerschlepper
- F: Fahrtrichtung
- 3a-3x: Reiheneinheit
- 4: Anbauflansch
- 5: Vorratsbehälter
- 6: Vereinzelungseinrichtung
- 7: Bodenbearbeitungswerkzeug
- 7a: Tragrolle
- 7b: Schneidscheibe
- 8: Hydraulikzylinder
- 9: Parallelogrammmechanismus
- 10: Druckventil
- 11: Sensor
- 12: Terminaleinheit
- H: Hydrauliksystem
- 13a-13e: funktionaler Zusammenhang
- 13a: mathematische Ausgleichsrechnung
- 13b: lineare Ausgleichsrechnung
- 13c: gleitende Mittelwerte
- 13d: lineare Spline-Interpolation
- 13e: kubische Spline-Interpolation
- 14a-14x: Wert (des Gesamtdrucks)
- 15a: Untergrenze
- 15b: Obergrenze
- 16: Führungsgröße
- 17: Regelgröße
- 100-112: Schritt
- 18: Regelabweichung
- 19: Störgröße

## Patentansprüche

1. Sämaschine (1) mit
- einer Mehrzahl von Reiheneinheiten (3a-3x), wobei die Reiheneinheiten (3a-3x) an einem sich quer zur Fahrtrichtung (F) erstreckenden Rahmen angeordnet sind und jeweils Bodenbearbeitungswerkzeuge (7) und einen auf die Bodenbearbeitungswerkzeuge (7) einen Schardruck ausübenden Hydraulikzylinder (8) aufweisen, wobei mittels eines jedem Hydraulikzylinder (8) vorgeschalteten Druckventils (10) der auf die Bodenbearbeitungswerkzeuge (7) wirkende Schardruck einstellbar ist,
- einer Sensoranordnung die zumindest zwei, vorzugsweise zumindest drei oder mehr, Sensoren (11) umfasst, welche jeweils dazu eingerichtet sind, ein elektrisches Signal im Zusammenhang mit einem auf die Bodenbearbeitungswerkzeuge (7) einer Reiheneinheit (3a-3x) wirkenden Gesamtdruck, insbesondere aus der Differenz zwischen dem Schardruck und einem Bodengegendruck, zu produzieren,
- einer Steuerungs- und/oder Regeleinrichtung (12), welche mit den Druckventilen (10) und der Sensoranordnung verbunden ist und dazu eingerichtet ist, den Schardruck jeder Reiheneinheit (3a-3x) individuell einzustellen und unter Berücksichtigung der elektrischen Signale der Sensoranordnung anzupassen,
**dadurch gekennzeichnet, dass** die Anzahl der Reiheneinheiten (3a-3x) die Anzahl der Sensoren (11), vorzugsweise zumindest um das doppelte, besonders vorzugsweise zumindest um das sechsfache, übersteigt, dass in einem Speicher der Steuerungs- und/oder Regeleinrichtung (12) ein funktionaler Zusammenhang (13a-13e) zwischen der Positionierung der einzelnen Reiheneinheiten (3a-3x) am Rahmen einerseits und der Zuordnung der Sensoren (11) zu den Reiheneinheiten (3a-3x) und deren produzierten elektrischen Signalen andererseits hinterlegt ist und die Steuerungs- und/oder Regeleinrichtung (12) mittels des funktionalen Zusammenhangs (13a-13e) dazu eingerichtet ist, den Schardruck jeder Reiheinheit (3a-3x) derart individuell zu regeln, dass der Gesamtdruck jeder Reiheneinheit (3a-3x) zumindest näherungsweise einen vorbestimmten Wert erreicht.

2. Sämaschine (1) nach Anspruch 1, **dadurch gekennzeichnet, dass** der funktionale Zusammenhang (13a-13e) eine mathematische Ausgleichsrechnung (13a) umfasst.

3. Sämaschine (1) nach Anspruch 2, **dadurch gekennzeichnet, dass** der funktionale Zusammenhang (13a-13e) eine lineare Ausgleichsrechnung (13b) umfasst.

4. Sämaschine (1) nach zumindest einem der vorstehenden Ansprüche, **dadurch gekennzeichnet, dass** der funktionale Zusammenhang (13a-13e) gleitende Mittelwerte (13c) umfasst.

5. Sämaschine (1) nach zumindest einem der vorstehenden Ansprüche, **dadurch gekennzeichnet, dass** der funktionale Zusammenhang (13a-13e) eine Spline-Interpolation (13d,13e) umfasst.

6. Sämaschine (1) nach zumindest einem der vorstehenden Ansprüche, **dadurch gekennzeichnet, dass** in dem Speicher der Steuerungs- und/oder Regeleinrichtung (12) eine Mehrzahl verschiedenartiger funktionaler Zusammenhänge (13a-13e) zwischen der Positionierung der einzelnen Reiheneinheiten (3a-3x) am Rahmen einerseits und der Zuordnung der Sensoren (11) zu den Reiheneinheiten (3a-3x) und deren produzierten elektrischen Signalen andererseits hinterlegt ist, dass die Art des zur Regelung der individuellen Schardrücke jeder Reiheneinheit (3a-3x) genutzten funktionalen Zusammenhangs (13a-13e) wählbar ist.

7. Sämaschine (1) nach zumindest einem der vorstehenden Ansprüche, **dadurch gekennzeichnet, dass** in dem Speicher der Steuerungs- und/oder Regeleinrichtung (12) ein Filter hinterlegt ist, dass der Filter dazu eingerichtet ist, das elektrische Signal zumindest eines Sensors (11), welches einen ersten Schwellenwert (15a) unterschreitet und/oder einen zweiten Schwellenwert (15b) überschreitet, zu kompensieren.

8. Verfahren zur individuellen Regelung einer Mehrzahl von jeweils auf Bodenbearbeitungswerkzeuge (7) einer Reiheneinheit (3a-3x) einer Sämaschine (1) einwirkenden Schardrücken, wobei der Schardruck für jede Reiheneinheit (3a-3x) mittels eines einem auf die Bodenbearbeitungswerkzeuge (7) wirkenden Hydraulikzylinder (8) vorgeschalteten Druckventils (10) eingestellt wird und auf zumindest zwei Reiheneinheiten (3a-3x) wirkende Gesamtdrücke jeweils mittels einer Sensoranordnung erfasst werden, wobei die Anzahl und Positionierung der einzelnen Reiheneinheiten (3a-3x) und an welchen dieser Reiheneinheiten (3a-3x) Gesamtdrücke erfasst werden bekannt sind und eine Steuerungs- und/oder Regeleinheit (12) signalleitend zumindest mit den Druckventilen (10) und der Sensoranordnung verbunden ist, **gekennzeichnet durch** die Schritte:
a. Auswerten der erfassten Gesamtdrücke,
b. Interpolieren mittels eines funktionalen Zusammenhangs (13a-13e) zwischen der Positionierung der einzelnen Reiheneinheiten (3a-3x) einerseits und den erfassten und ausgewerteten Gesamtdrücken andererseits,
c. Bestimmen individueller Schardrücke für alle Reiheneinheiten (3a-3x) anhand des angewandten funktionalen Zusammenhangs (13a-13e), und
d. Einstellen der individuellen Schardrücke.

9. Verfahren nach Anspruch 8, **dadurch gekennzeichnet, dass** die erfassten und ausgewerteten Gesamtdrücke als Stützstellen bei der Anwendung des funktionalen Zusammenhangs (13a-13e) dienen und zwischen und/oder neben den Stützstellen mittels des funktionalen Zusammenhangs (13a-13e) interpoliert wird.

10. Verfahren nach zumindest einem der vorstehenden Ansprüche, **dadurch gekennzeichnet, dass** eine Art von funktionalem Zusammenhang (13a-13e) aus einer Mehrzahl verschiedenartiger funktionaler Zusammenhänge (13a-13e) automatisch oder manuell ausgewählt wird.

11. Verfahren nach zumindest einem der vorstehenden Ansprüche, **gekennzeichnet durch** zumindest einen der folgenden Schritte:
a. Prüfen ob zumindest einer der erfassten Gesamtdrücke einen ersten Schwellenwert (15a) unterschreitet und/oder einen zweiten Schwellenwert (15b) überschreitet,
*b.* Kompensieren zumindest eines den ersten Schwellenwert (15a) unterschreitenden oder den zweiten Schwellenwert (15b) überschreitenden Gesamtdrucks bevor der funktionale Zusammenhang (13a-13e) angewandt wird.

12. Steuerungs- und/oder Regeleinheit (12) für eine Sämaschine (1) wobei die Sämaschine (1) eine Mehrzahl von Reiheneinheiten (3a-3x), wobei die Reiheneinheiten (3a-3x) an einem sich quer zur Fahrtrichtung (F) erstreckenden Rahmen angeordnet sind und jeweils Bodenbearbeitungswerkzeuge (7) und einen auf die Bodenbearbeitungswerkzeuge (7) einen Schardruck ausübenden Hydraulikzylinder (8) aufweisen, wobei mittels eines jedem Hydraulikzylinder (8) vorgeschalteten Druckventils (10) der auf die Bodenbearbeitungswerkzeuge (7) wirkende Schardruck einstellbar ist, und eine Sensoranordnung die zumindest zwei, vorzugsweise zumindest drei oder mehr, Sensoren (11) umfasst, welche jeweils dazu eingerichtet sind, ein elektrisches Signal im Zusammenhang mit einem auf die Bodenbearbeitungswerkzeuge (7) einer Reiheneinheit (3a-3x) wirkenden Gesamtdruck, insbesondere aus der Differenz zwischen dem Schardruck und einem Bodengegendruck, zu produzieren, aufweist, wobei die Steuerungs- und/oder Regeleinheit (12) mit den Druckventilen (10) und der Sensoranordnung verbindbar ist, **dadurch gekennzeichnet, dass** die Steuerungs- und/oder Regeleinheit (12) zum Ausführen des Verfahrens nach zumindest einem der Ansprüche 8 bis 12 eingerichtet ist.

## Claims

1. Seeding machine (1), comprising
- a plurality of row units (3a-3x), wherein the row units (3a-3x) are arranged on a frame extending transversely to the direction of travel (F) and respectively have soil cultivation tools (7) and a hydraulic cylinder (8) exerting a press force on the soil cultivation tools (7), wherein the press force acting on the soil cultivation tools (7) is adjustable by means of a pressure valve (10) upstream of each hydraulic cylinder (8),
- a sensor arrangement that comprises at least two, preferably at least three or more sensors (11) which are respectively configured to produce an electrical signal in correlation with a total pressure acting on the soil cultivation tools (7) of a row unit (3a-3x), in particular from the difference between the press force and a ground counter-pressure,
- a control and/or regulating device (12) which is connected to the pressure valves (10) and the sensor arrangement, and is configured to individually adjust the press force of each row unit (3a-3x) and to adapt it under consideration of the electrical signals of the sensor arrangement,
**characterized in that** the number of row units (3a-3x) exceeds the number of the sensors (11), preferably by at least double, particularly preferably by at least six times; **in that** a functional relationship (13a-13e) between the positioning of the individual row units (3a-3x) on the frame on the one hand and the association of the sensors (11) with the row units (3a-3x) and their produced electrical signals on the other hand is stored in a memory of the control and/or regulating device (12); and the control and/or regulating device (12) is configured, by means of the functional relationship (13a-13e), to control the press force of each row unit (3a-3x) individually in such a way that the total pressure of each row unit (3a-3x) reaches at least approximately a predetermined value.

2. Seeding machine (1) according to claim 1, **characterized in that** the functional relationship (13a-13e) comprises a mathematical equalization calculation (13a).

3. Seeding machine (1) according to claim 2, **characterized in that** the functional relationship (13a-13e) comprises a linear equalization calculation (13b).

4. Seeding machine (1) according to at least one of the preceding claims, **characterized in that** the functional relationship (13a-13e) comprises sliding mean values (13c).

5. Seeding machine (1) according to at least one of the preceding claims, **characterized in that** the functional relationship (13a-13e) comprises a spline interpolation (13d, 13e).

6. Seeding machine (1) according to at least one of the preceding claims, **characterized in that** a plurality of different types of functional relationships (13a-13e), between the positioning of the individual row units (3a-3x) on the frame on the one hand and the association of the sensors (11) with the row units (3a-3x) and their produced electrical signals on the other hand, is stored in the memory of the control and/or regulating device (12); **in that** the type of functional relationship (13a-13e) used for regulating the individual press forces of each row unit (3a-3x) can be selected.

7. Seeding machine (1) according to at least one of the preceding claims, **characterized in that** a filter is stored in the memory of the control and/or regulating device (12); **in that** the filter is configured to compensate the electrical signal of at least one sensor (11) which falls below a first threshold value (15a) and/or exceeds a second threshold value (15b).

8. Method for the individual control of a plurality of respective press forces acting on soil cultivation tools (7) of a row unit (3a-3x) of a seeding machine (1), wherein the press force for each row unit (3a-3x) is adjusted by means of a pressure valve (10) upstream of a hydraulic cylinder (8) acting on the soil cultivation tools (7), and total pressures acting on at least two row units (3a-3x) are respectively detected by means of a sensor arrangement; wherein the number and positioning of the individual row units (3a-3x), and at which of these row units (3a-3x) total pressures are detected, are known, and a control and/or regulating unit (12) is connected in a signal-conducting manner to at least the pressure valves (10) and the sensor arrangement, **characterized by** the steps:
a. evaluating the detected total pressures,
b. interpolating by means of a functional relationship (13a-13e) between the positioning of the individual row units (3a-3x) on the one hand and the detected and evaluated total pressures on the other hand,
c. determining individual press forces for all row units (3a-3x) using the applied functional relationship (13a-13e), and
d. adjusting the individual press forces.

9. Method according to claim 8, **characterized in that** the detected and evaluated total pressures serve as support points in the application of the functional relationship (13a-13e), and interpolation between and/or next to the support points is performed by means of the functional relationship (13a-13e).

10. Method according to at least one of the preceding claims, **characterized in that** a type of functional relationship (13a-13e) is automatically or manually selected from a plurality of different types of functional relationships (13a-13e).

11. Method according to at least one of the preceding claims, **characterized by** at least one of the following steps:
a. checking whether at least one of the detected total pressures falls below a first threshold value (15a) and/or exceeds a second threshold value (15b),
*b.* compensating at least one total pressure falling below the first threshold value (15a) or exceeding the second threshold value (15b) before the functional relationship (13a-13e) is applied.

12. Control and/or regulating unit (12) for a seeding machine (1), wherein the seeding machine (1) has a plurality of row units (3a-3x), wherein the row units (3a-3x) are arranged on a frame extending transversely to the direction of travel (F) and respectively have soil cultivation tools (7) and a hydraulic cylinder (8) exerting a press force on the soil cultivation tools (7), wherein the press force acting on the soil cultivation tools (7) is adjustable by means of a pressure valve (10) upstream of each hydraulic cylinder (8), and; a sensor arrangement that comprises the at least two, preferably at least three or more sensors (11) which are respectively configured to produce an electrical signal in correlation with a total pressure acting on the soil cultivation tools (7) of a row unit (3a-3x), in particular from the difference between the press force and a ground counter-pressure; wherein the control and/or regulating unit (12) can be connected to the pressure valves (10) and the sensor arrangement, **characterized in that** the control and/or regulating unit (12) is configured to execute the method according to at least one of claims 8 to 12.

## Revendications

1. Semoir (1) comprenant
- une multitude d'unités de rang (3a-3x), les unités de rang (3a-3x) étant agencées au niveau d'un cadre s'étendant transversalement par rapport à la direction de déplacement (F) et présentant respectivement des outils de travail du sol (7) et un vérin hydraulique (8) exerçant une pression de soc sur les outils de travail du sol (7), une soupape de pression (10) disposée en amont de chaque vérin hydraulique (8) permettant de régler la pression de soc agissant sur les outils de travail du sol (7),
- un agencement de capteurs qui comprend au moins deux, de préférence au moins trois capteurs (11) ou plus, qui sont respectivement conçus pour produire un signal électrique en relation avec une pression totale agissant sur les outils de travail du sol (7) d'une unité de rang (3a-3x), en particulier à partir de la différence entre la pression de soc et une contre-pression du sol,
- un dispositif de commande et/ou de régulation (12), qui est relié aux soupapes de pression (10) et à l'agencement de capteurs et conçu pour régler individuellement la pression de soc de chaque unité de rang (3a-3x) et pour l'adapter compte tenu des signaux électriques de l'agencement de capteurs,
**caractérisé en ce que** le nombre d'unités de rang (3a-3x) est supérieur au nombre de capteurs (11) et représente de préférence au moins le double, de manière particulièrement préférée au moins le sextuple, **en ce qu'**une relation fonctionnelle (13a-13e) entre le positionnement des différentes unités de rang (3a-3x) au niveau du cadre d'une part et l'attribution des capteurs (11) aux unités de rang (3a-3x) et leurs signaux électriques produits d'autre part est enregistrée dans une mémoire du dispositif de commande et/ou de régulation (12) et le dispositif de commande et/ou de régulation (12) est conçu pour régler individuellement, au moyen de la relation fonctionnelle (13a-13e), la pression de soc de chaque unité de rang (3a-3x) de manière telle que la pression totale de chaque unité de rang (3a-3x) atteint au moins approximativement une valeur prédéfinie.

2. Semoir (1) selon la revendication 1, **caractérisé en ce que** la relation fonctionnelle (13a-13e) comprend un calcul de compensation mathématique (13a).

3. Semoir (1) selon la revendication 2, **caractérisé en ce que** la relation fonctionnelle (13a-13e) comprend un calcul de compensation linéaire (13b).

4. Semoir (1) selon au moins l'une quelconque des revendications précédentes, **caractérisé en ce que** la relation fonctionnelle (13a-13e) comprend des valeurs moyennes mobiles (13c).

5. Semoir (1) selon au moins l'une quelconque des revendications précédentes, **caractérisé en ce que** la relation fonctionnelle (13a-13e) comprend une interpolation spline (13d, 13e).

6. Semoir (1) selon au moins l'une quelconque des revendications précédentes, **caractérisé en ce qu**"une multitude de relations fonctionnelles (13a-13e) différentes entre le positionnement des différentes unités de rang (3a-3x) au niveau du cadre d'une part et l'attribution des capteurs (11) aux unités de rang (3a-3x) et leurs signaux électriques produits d'autre part est enregistrée dans la mémoire du dispositif de commande et/ou de régulation (12) et en ce que le type de relation fonctionnelle (13a-13e) utilisée pour la régulation des pressions de soc individuelles de chaque unité de rang (3a-3x) peut être choisi.

7. Semoir (1) selon au moins l'une quelconque des revendications précédentes, **caractérisé en ce qu**"un filtre est enregistré dans la mémoire du dispositif de commande et/ou de régulation (12) et en ce que le filtre est conçu pour compenser le signal électrique d'au moins un capteur (11) qui passe sous une première valeur seuil (15a) et/ou au-dessus d'une seconde valeur seuil (15b).

8. Procédé pour la régulation individuelle d'une multitude de pressions de soc agissant respectivement sur des outils de travail du sol (7) d'une unité de rang (3a-3x) d'un semoir (1), la pression de soc pour chaque unité de rang (3a-3x) étant réglée au moyen d'une soupape de pression (10) disposée en amont d'un vérin hydraulique (8) agissant sur les outils de travail du sol (7) et les pressions totales agissant sur au moins deux unités de rang (3a-3x) étant détectées respectivement au moyen d'un agencement de capteurs, le nombre et le positionnement des différentes unités de rang (3a-3x) et les unités de rang (3a-3x) au niveau desquelles les pressions totales sont détectées étant connus et une unité de commande et/ou de régulation (12) étant reliée, de manière à conduire les signaux, au moins aux soupapes de pression (10) et à l'agencement de capteurs, **caractérisé par** les étapes :
a. évaluation des pressions totales détectées,
b. interpolation, au moyen d'une relation fonctionnelle(13a-13e), entre le positionnement des différentes unités de rang (3a-3x) d'une part et les pressions totales détectées et évaluées d'autre part,
c. détermination des pressions de soc individuelles pour toutes les unités de rang (3a-3x) à l'aide de la relation fonctionnelle utilisée (13a-13e) et
d. réglage des pressions de soc individuelles.

9. Procédé selon la revendication 8, **caractérisé en ce que** les pressions totales détectées et évaluées servent de points d'appui lors de l'utilisation de la relation fonctionnelle (13a-13e) et une interpolation est réalisée entre et/ou à côté des points d'appui au moyen de la relation fonctionnelle (13a-13e).

10. Procédé selon au moins l'une quelconque des revendications précédentes, **caractérisé en ce qu"**un type de relation fonctionnelle (13a-13e) est choisi automatiquement ou manuellement parmi une multitude de relations fonctionnelles (13a-13e) différentes.

11. Procédé selon au moins l'une quelconque des revendications précédentes, **caractérisé par** au moins l'une des étapes suivantes :
a. test du fait qu'au moins l'une des pressions totales détectées passe sous une première valeur seuil (15a) et/ou passe au-dessus d'une seconde valeur seuil (15b),
*b.* compensation d'au moins une pression totale passant sous la première valeur seuil (15a) ou passant au-dessus de la seconde valeur seuil (15b) avant l'utilisation de la relation fonctionnelle (13a-13e).

12. Unité de commande et/ou de régulation (12) pour un semoir (1), le semoir (1) présentant une multitude d'unités de rang (3a-3x), les unités de rang (3a-3x) étant agencées au niveau d'un cadre s'étendant transversalement par rapport à la direction de déplacement (F) et présentant respectivement des outils de travail du sol (7) et un vérin hydraulique (8) exerçant une pression de soc sur les outils de travail du sol (7), une soupape de pression (10) disposée en amont de chaque vérin hydraulique (8) permettant de régler la pression de soc agissant sur les outils de travail du sol (7) et un agencement de capteurs, qui comprend au moins deux, de préférence au moins trois capteurs (11) ou plus, qui sont respectivement conçus pour produire un signal électrique en relation avec une pression totale agissant sur les outils de travail du sol (7) d'une unité de rang (3a-3x), en particulier à partir de la différence entre la pression de soc et une contre-pression du sol, l'unité de commande et/ou de régulation (12) pouvant être reliée aux soupapes de pression (10) et à l'agencement de capteurs,
**caractérisé en ce que** l'unité de commande et/ou de régulation (12) est conçue pour la mise en oeuvre du procédé selon au moins l'une quelconque des revendications 8 à 12.
